# EUROPÄISCHE PATENTANMELDUNG

(11) **EP 1 643 617 A2**
(43) Veröffentlichungstag der Anmeldung: **05.04.2006**
(21) Anmeldenummer: 05013672.0
(22) Anmeldetag: 24.06.2005
(51) Int. Cl.: H02K 1/27, H02K 15/03

(54) **Rotorkörper für einen Rotor einer elektrischen Maschine und Verfahren zur Herstellung eines Rotorkörpers**

(30) Priorität: 29.09.2004 DE 102004047311
(71) Anmelder: MINEBEA Co., Ltd., Kitasaku-gun, Nagano-ken 3849-2100 (JP)
(72) Erfinder: Hauger, Willi, 78050 Villingen-Schwenningen (DE); Hans, Helmut, Dr., 78112 Sankt Georgen (DE)
(74) Vertreter: Liesegang, Eva

(57) **Zusammenfassung**

Rotorkörper für einen Rotor einer elektrischen Maschine mit wenigstens einem Rotorblech, das nach Art eines Bandes mit einer Reihe von Vorsprüngen entlang einer Längskante des Bandes ausgebildet und in der Ebene des Bandes zu einem Ring gebogen ist, wobei nach dem Biegen des Rotorbleches die Vorsprünge nach innen weisen und das Rotorblech eine im wesentlichen geschlossene Außenkante aufweist.

## Beschreibung

Die Erfindung betrifft einen Rotorkörper für einen Rotor einer elektrischen Maschine und ein Verfahren zur Herstellung eines Rotorkörpers. Der erfindungsgemäße Rotorkörper kann in vielen Arten elektrischer Maschinen, wie Gleichstrommotoren und Generatoren, eingesetzt werden.

Ein bevorzugtes Anwendungsgebiet der Erfindung sind bürstenlose Gleichstrommotoren und andere Permanentmagnetmotoren. Bei solchen Motoren ist es grundsätzlich bekannt, Permanentmagnete auf dem Umfang eines Rotorrückschlusses vorzusehen oder in diesen einzubetten. Die Erfindung ist ferner anwendbar auf Elektromotoren oder Generatoren, welche als Innenläufermotor oder Außenläufermotor konfiguriert sein können. Elektromotoren mit einer Innenläuferkonfiguration weisen einen Rotorrückschluß auf, der auf eine Welle aufgebracht ist, sowie einen oder mehrere Permanentmagnete, die auf den Rotorrückschluß aufgebracht oder in diesen eingebettet sind. Ferner umfassen die Motoren eine Statoranordnung aus z.B. einer Anzahl paketierter Metallbleche, die einen ringförmigen Statorrückschluß bilden, von dem Polschuhe nach innen abstehen. Auf die Polschuhe sind Phasenwicklungen aufgebracht. Die Rotoranordnung ist koaxial in die Statoranordnung eingefügt. Bei einer Außenläuferkonfiguration umgibt die Rotoranordnung den Stator koaxial.

Die Erfindung ist insbesondere anwendbar auf einen Innenläufermotor mit einer Rotoranordnung mit eingebetteten Permanentmagneten.

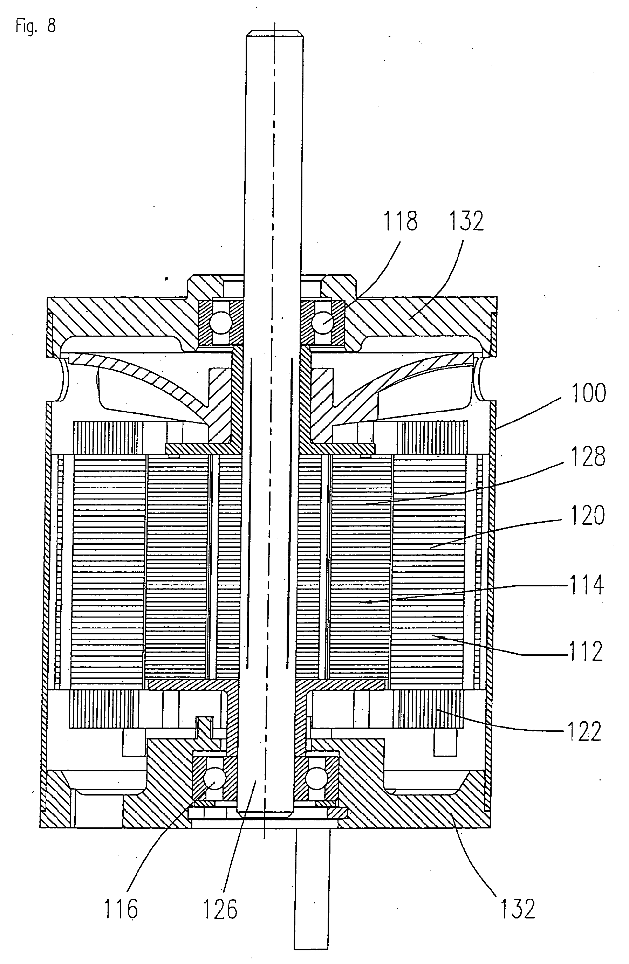

Fig. 8 zeigt grundsätzlich den Aufbau eines Elektromotors mit einem Gehäuse 100, in dem eine Statoranordnung 112, eine Rotoranordnung 114 sowie Lager 116, 118 zum drehbaren Lagern der Rotoranordnung aufgenommen sind. Die Statoranordnung 112 umfaßt paketierte Metallbleche 120 und Wicklungen 122 und grenzt einen Innenraum ein, in den die Rotoranordnung 114 eingefügt ist. Die Rotoranordnung 114 umfaßt die Motorwelle 126, einen Eisenrückschluß 128 und Permanentmagnete 130. Die Lager 116, 118 für die Lagerung der Rotoranordnung können in einen Flansch 132 des Motorgehäuses 100 integriert sein. Fig. 8 dient der Erläuterung des grundsätzlichen Aufbaus eines Elektromotors. Wie eingangs ausgeführt, betrifft die Erfindung in ihrer bevorzugten Anwendung einen Rotorrückschluß für einen solchen Elektromotor, wobei die Permanentmagnete in den Rotorrückschluß eingebettet sind.

Rotoren mit eingebetteten Magneten sind im Stand der Technik allgemein bekannt. Eine Rotorkonfiguration mit einer mehrpoligen, speichenartigen Anordnung sich radial erstreckender, eingebetteter Magneten ist z.B. in der EP 0 691 727 A1 gezeigt. Diese Veröffentlichung zeigt mehrere Permanentmagnete, die in Schlitze eingefügt sind, welche in dem Rotorkörper ausgebildet sind, um die Magnete von außen in den Rotorkörper einzuschieben.

Ein Rotorkörper oder Rotorrückschluß zum Aufnehmen der Permanentmagnete wird im Stand der Technik häufig aus einem Stanzblechstapel oder -paket gebildet, wobei jedes Rückschlußblech ringförmig ist und Schlitze oder Aussparungen zum Aufnehmen der Permanentmagnete aufweist. Der Rotorkörper wird z.B. im Preßsitz auf eine Motorwelle aufgebracht. Es ist auch bekannt, den Rotorkörper und die Welle formschlüssig mit Kunststoff zu umspritzen.

Bei der Herstellung eines solchen Rotorrückschlusses entsteht das Problem, daß bei dem Ausstanzen der einzelnen Rückschlußbleche ein erheblicher Verschnitt entsteht. Darüberhinaus ergibt sich durch die magnetische Vorzugsrichtung der Bleche eine magnetische Unsymmetrie, die sich störend auf den Betrieb des Motors auswirken kann.

Es ist die Aufgabe der Erfindung, einen Rotorkörper für einen Rotor einer elektrischen Maschine anzugeben, der Material sparend und kostengünstig hergestellt werden kann.

Diese Aufgabe wird durch einen Rotorkörper mit den Merkmalen von Anspruch 1 sowie durch ein Verfahren gemäß Anspruch 9 gelöst.

Die Erfindung sieht einen Rotorkörper für einen Rotor einer elektrischen Maschine mit wenigstens einem Rotorblech vor, das nach Art eines Bandes mit einer Reihe von Vorsprüngen entlang einer Längskante des Bandes ausgebildet und in der Ebene des Bandes zu einem Ring gebogen ist, wobei nach dem Biegen des Rotorbleches die Vorsprünge nach innen weisen und das Rotorblech eine im wesentlichen geschlossene Außenkante aufweist. Durch den erfindungsgemäßen Aufbau ist es möglich, den Rotorkörper aus Blechen aufzubauen, die zunächst die Form eines langgestreckten Bandes haben, das mit wenig Verschnitt aus einem Blech ausgestanzt werden kann. Bevorzugt hat der Rotorkörper auch die Funktion eines Rotorrückschlusses. Da dieser erfindungsgemäß aus einem langgestreckten Blechband hergestellt wird, ergibt sich, daß der Rotorrückschluß in radialer Richtung eine einheitliche magnetische Vorzugsrichtung aufweist. Damit das Band nach dem Biegen einen kreisförmigen Rotorkörper mit Schlitzen zum Einbringen von Permanentmagneten bildet, sind die Vorsprünge mit Abstand zueinander entlang der Längskante des Bandes angeordnet und konisch geformt. Durch geeignete Bemessung des Konus kommen die Flanken zweier benachbarter Vorsprünge nach dem Biegen des Bleches parallel zueinander zu liegen und grenzen damit vorzugsweise einen Schlitz zur Aufnahme eines Permanentmagneten ein. Die Vorsprünge können jedoch auch so angeordnet und ausgebildet sein, daß sich nach dem Biegen des Rotorbleches ein noch weitgehend geschlossener Rotorkörper ergibt, wobei dann die Permanentmagnete zweckmäßig auf den Außenumfang des Rotorkörpers aufgebracht werden. In dieser Variante sind die Vorsprünge ohne Abstand nebeneinander entlang der Längskante des Bandes angeordnet.

In seiner bevorzugten Ausführung ist das Rotorblech so ausgebildet, daß jeweils zwei Rotorbleche aus einem Blechband ausgestanzt werden können, wobei die Bleche einander gegenüber liegen und die Vorsprünge ineinander greifen. Dadurch ergibt sich eine optimale Materialausnutzung.

Nach dem Ausstanzen der Rotorbleche werden diese in der Regel zunächst zu einem Blechstapel verbunden und anschließend zu einem Rotorkörper gebogen und an einer Nahtstelle, etwa durch Laserschweißen, geschlossen. Dadurch erhält man einen kreisförmigen Rotorkörper mit geschlossenem Außenumfang und nach innen offenen Schlitzen zum Einbringen der Permanentmagnete. Die einzelnen Rotorbleche können relativ zueinander derart angeordnet werden, daß ihre Nahtstellen fluchten oder jeweils gruppenweise fluchten oder daß die Nahtstellen sämtlicher Rotorbleche zueinander versetzt sind. Die Rotorbleche bestehen vorzugsweise aus einem magnetisch wirksamen Material, so daß der Rotorkörper auch als Rückschluß dient. Die Bleche können jedoch auch aus einem nicht magnetischen Material bestehen, um einen nicht magnetisch wirksamen Rotorkörper zu bilden, sofern die Magnetisierung der Permanentmagnete dies erlaubt, beispielsweise bei Verwendung einer Halbach-Magnetisierung.

Der Rotorkörper gemäß der Erfindung wird vorzugsweise auf eine Welle aufgebracht, indem er direkt um die Welle gewickelt wird. Die Welle kann an ihrem Außenumfang eine Verzahnung aufweisen, die mit den Vorsprüngen des Rotorkörpers in Eingriff kommt. Es ist auch möglich, daß die Welle auf andere Weise behandelt ist, um die Haftung des Rotorkörpers an der Welle zu gewährleisten; beispielsweise durch Aufrauhen, Outsert-Technik oder Knife-Edges. Eine Verzahnung könnte in die Welle eingearbeitet oder in einem Körper ausgebildet werden, der auf die Welle aufgebracht oder einteilig mit dieser ausgebildet wird.

Die Erfindung ist im folgenden anhand bevorzugter Ausführungen mit Bezug auf die Zeichnungen näher erläutert. In den beschriebenen Ausführungsbeispielen bildet der erfindungsgemäße Rotorkörper einen magnetischen Rotorrückschluß und ist aus magnetisch wirksamen Metallblechen aufgebaut. Ein Fachmann wird jedoch verstehen, daß die Grundsätze der vorliegenden Erfindung auch auf einen nicht magnetischen Rotorkörper aus einem anderen Material anwendbar sind. In den Figuren zeigen:
- Fig. 1a: zwei Rückschlußbleche zur Herstellung des erfindungsgemäßen Rotorrückschlusses die aus einem Blechband ausgestanzt wurden;
- Fig. 1b: ein einzelnes ausgestanztes Rückschlußblech in Form eines Bandes;
- Fig. 2: das Rückschlußblech der Fig. 1b, nachdem es zu einem Ring gebogen wurde;
- Fig. 3: einen Stapel aus mehreren Rückschlußblechen in abgewickeltem Zustand;
- Fig. 4: eine schematische Darstellung des erfindungsgemäßen Rotorrückschlusses in abgewickeltem Zustand sowie auf eine Welle aufgewickelt;
- Fig. 5: einen Rotorrückschluß gemäß der Erfindung, der auf eine Welle aufgebracht ist;
- Fig. 6a: eine Seitenansicht einer Welle zum Aufnehmen des erfindungsgemäßen Rotorrückschlusses;
- Fig. 6b: eine Schnittdarstellung durch die Welle der Fig. 6a;
- Fig. 7: eine perspektivische Darstellung einer alternativen Ausführung der Welle zum Aufbringen eines Rotorrückschlusses; und
- Fig. 8: eine schematische Darstellung eines Elektromotors, in dem der erfindungsgemäße Rotorrückschluß eingesetzt werden kann.

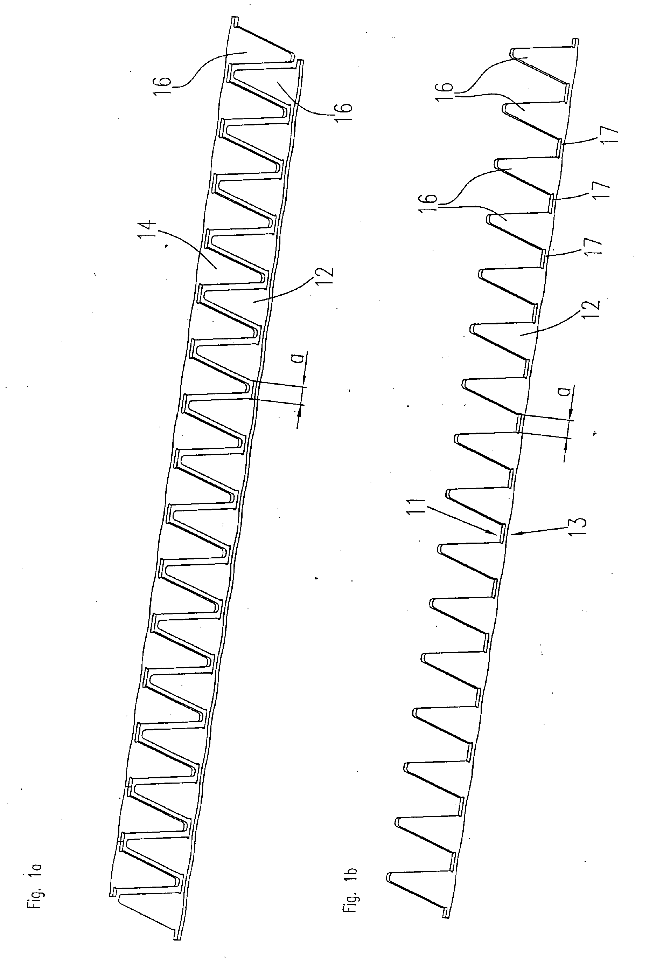

Fig. 1a zeigt zwei Rückschlußbleche 12, 14, die aus einem Blechband ausgestanzt wurden. Fig. 1b zeigt ein einzelnes Rückschlußblech 12, das aus dem Blechband herausgestanzt wurde. Jedes Rückschlußblech 12, 14 ist nach Art eines Bandes mit einer Reihe von Vorsprüngen 16 entlang einer Längskante 11 des Bandes 12 oder 14 ausgebildet. Die Vorsprünge 16 sind mit gleichmäßigem Abstand a entlang der Länge des Bandes angeordnet und haben eine konische Form, wie in Fig. 1a und 1b dargestellt. Der Konus jedes der Vorsprünge 16 ist an seiner Basis über Stege 17 mit benachbarten Vorsprüngen 16 verbunden. Die den Vorsprüngen 16 gegenüberliegende Längskante 13 des Bandes 12 oder 14 bildet eine vorzugsweise geradlinige Außenkante. Jedoch können auch leichte Abweichungen von einer geraden Linie vorgesehen werden, etwa um Drehmomentschwankungen gezielt zu beeinflussen. Es ist beispielsweise möglich, die Längskante 13 des Bandes wellig oder mit Radien auszubilden, um einen Rückschlußkörper zu erhalten, dessen Außenumfang konkave und/oder konvexe Abschnitte aufweist. Wie aus Fig. 1a zu erkennen ist, kann jedes Rückschlußblech 12, 14 mit minimalem Verschnitt aus einem Blechband oder einem flächigen Blech ausgestanzt werden.

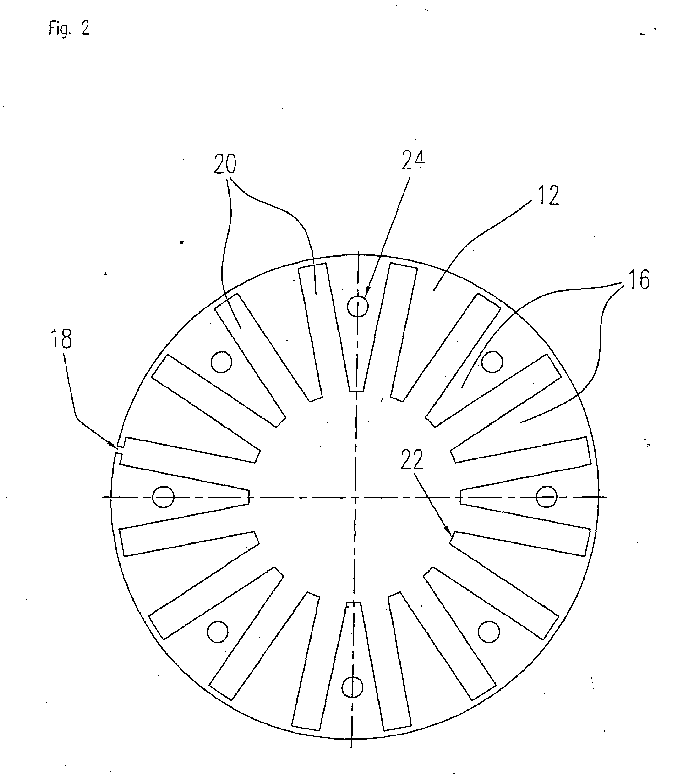

Erfindungsgemäß wird das Rückschlußblech 12, wie in Fig. 2 gezeigt, in der Ebene des Bandes zu einem Ring gebogen, dessen Profil im wesentlichen dem Blechschnitt eines üblichen Rotorrückschlusses entspricht. Der Ring weist jedoch einen Spalt 18 auf, der beispielsweise durch Schweißen, insbesondere durch Laserschweißen geschlossen werden kann. Die konischen Vorsprünge 16 sind so dimensioniert, daß sich nach dem Biegen des Rückschlußbleches 12 zu einem Ring Schlitze bzw. Aussparungen 20 mit im wesentlichen parallelen Seitenflanken ergeben, in die Permanentmagnete 130 eingefügt werden können. Wenn der Rückschluß auf eine Welle aufgebracht wird, können die Spitzen 22 der Vorsprünge 16 mit einer Verzahnung oder Ausnehmungen in der Welle in Eingriff kommen. Es ist möglich, zwischen dem Rückschlußkörper und der Welle eine formschlüssige Verbindung herzustellen oder die Welle mit einer Beschichtung mit hohem Reibkoeffizienten zu versehen, die mit den Spitzen 22 der Vorsprünge 16 zusammenwirkt. Eine Verzahnung für den Rotorrückschluß kann direkt in die Motorwelle integriert und beispielsweise durch Kaltumformtechnik oder durch Materialabtragung hergestellt werden. Bei hohen Stückzahlen wird die Kaltumformtechnik wirtschaftlicher sein. Es ist auch möglich, einen Verzahnungskörper für den Rotorrückschluß direkt auf die Motorwelle aufzuspritzen, beispielsweise durch Einsatz der Outsert-Technologie. In diesem Fall ist es zweckmäßig, die Wellenoberfläche zunächst zum Beispiel mit Hilfe eines Rändels oder Knife Edges aufzurauhen oder die Welle mit einem Polyesterfilm zu grundieren, um die Haftung des Verzahnungskörpers auch ohne mechanische Aufrauhung zu verbessern.

In Fig. 2 sind ferner Erhebungen 24 auf dem Rückschlußblech 12 angedeutet, die als Verbindungspunkte für die Verbindung mit anderen Rückschlußblechen zur Bildung eines Blechstapels dienen.

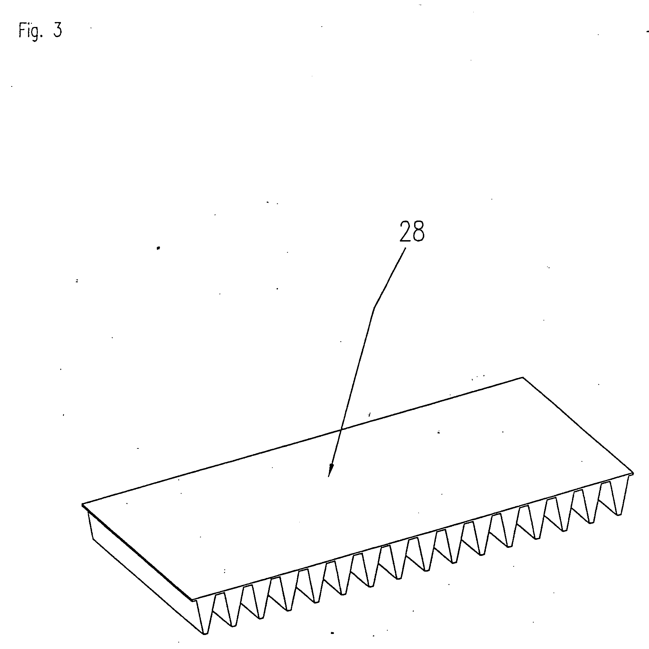

Fig. 3 zeigt eine Ausführungsform des erfindungsgemäßen Rotorrückschlusses 28, bei dem die einzelnen Rückschlußbleche in abgewickeltem Zustand zu einem Blechpaket gestapelt und miteinander verbunden werden, bevor der Rotorrückschluß zu einem geschlossenen Ring gebogen wird. In einer alternativen Ausführung könnten die einzelnen Rückschlußbleche jeweils zu einem Ring gebogen und anschließend zu einem Blechstapel verbunden werden. Es ist möglich, die einzelnen Bleche oder den gesamten Blechstapel nach Schließen des Ringes an der entstehenden Nahtstelle zu verschweißen.

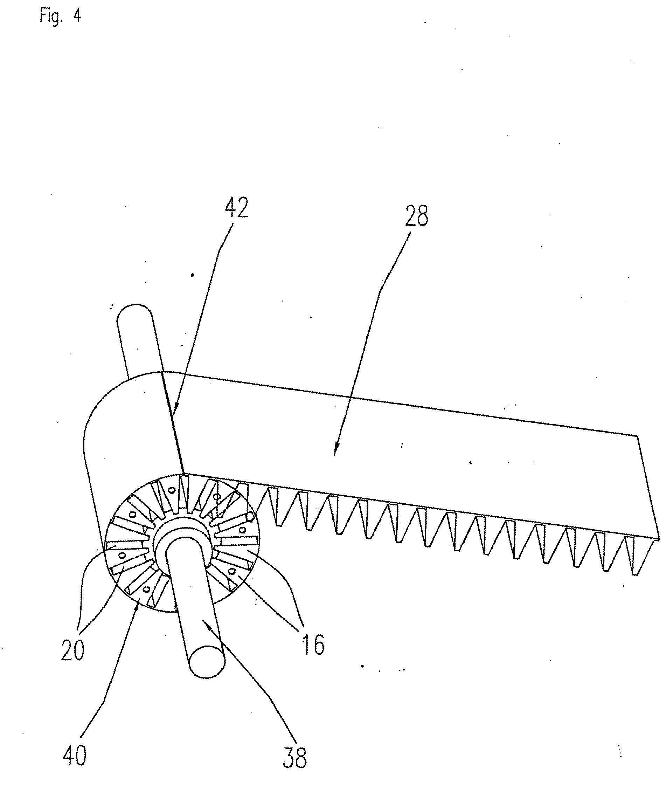

Fig. 4 zeigt eine Ausführung, bei welcher der Rotorrückschluß 28, wie in Fig. 3, zunächst zu einem Blechstapel zusammengefügt und anschließend auf eine Welle 38 aufgewickelt wird, wie bei 40 dargestellt. Die Welle weist eine Verzahnung oder ein ähnliches Gegenstück auf, das mit den Spitzen der Vorsprünge 16 des Rotorrückschlusses 40 in Eingriff kommt, um den Rotorrückschluß formschlüssig mit der Welle 38 zu verbinden. Der Rotorrückschluß 40 wird bei einer Nahtstelle 42 beispielsweise durch Schweißen geschlossen. In einer anderen Ausführung kann der aufgewickelte Rotor 40 durch ein Rohr, das über den Rotorkörper geschoben wird, Endkappen, Spannringe oder dergleichen zusammengehalten werden. In die in dem Rotorrückschluß 40 ausgebildeten Schlitze bzw. Aussparungen 20 können Permanentmagnete entweder vor dem Aufwickeln des Rotorrückschlusses auf die Welle 38 eingelegt oder danach in axialer Richtung eingeschoben werden. Durch geeignete Wahl des Konus der Vorsprünge 16 kann erreicht werden, daß die Schlitze bzw. Aussparungen 20 nach dem Biegen des Rotorrückschlusses vorzugsweise parallele Seitenwände zur Aufnahme der Permanentmagnete aufweisen.

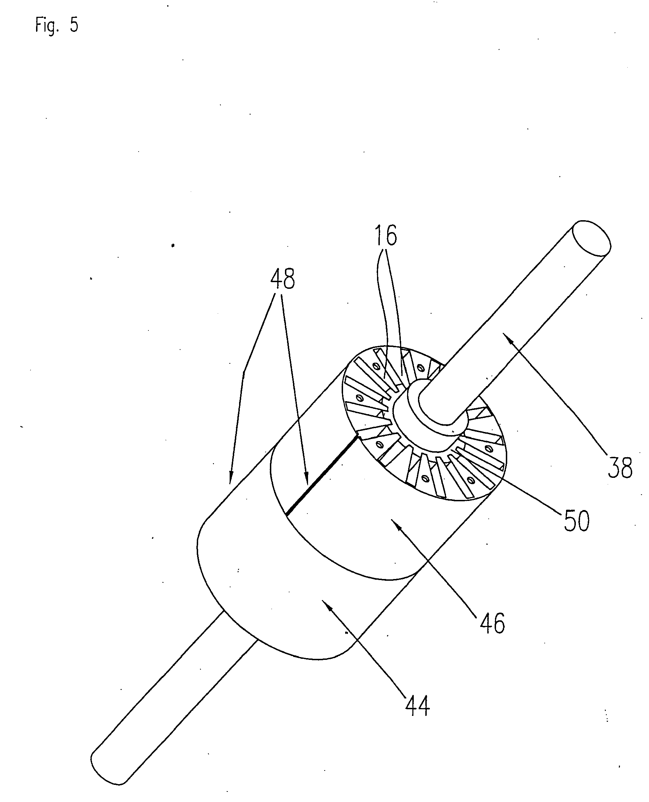

Fig. 5 zeigt eine Ausführung der Erfindung, bei der eine erste Gruppe Rückschlußbleche einen ersten Rückschlußabschnitt 44 bildet und eine zweite Gruppe Rückschlußbleche einen zweiten Rückschlußabschnitt 46 bildet. Es ist möglich, die Rückschlußabschnitte 44, 46 nacheinander auf die Welle 38 zu wickeln oder alternativ zunächst jeden der Rückschlußabschnitte 44, 46 zu einem Ring zu schließen, diese dann miteinander zu verbinden und anschließend den gesamten Rotorrückschluß auf die Welle aufzubringen. Dabei können die Nahtstellen 48 jeweils eines Rückschlußabschnittes 44, 46 relativ zueinander so angeordnet werden, daß sie nicht fluchten. Sofern zwei Rückschlußabschnitte vorgesehen werden, bietet sich an, die Nahtstellen mit einem Versatz von 180° anzuordnen, um eine ausgeglichene Gewichtsverteilung des Rotors zu erreichen. Bei dieser Anordnung ergibt sich zusätzlich eine symmetrische Magnetfeldgeometrie. Anstelle einer Schweißnaht kann auch vorgesehen sein, die Rückschlußbleche durch ein Rohr, Endkappen, Spannringe oder dergleichen an den Nahtstellen zu schließen.

Der in Fig. 5 gezeigte Rotorrückschluß ist auf der Welle 38 über einen Körper 50 mit einer Verzahnung, in welche die Vorsprünge 16 eingreifen, gehalten. Dieser Körper 50 kann beispielsweise direkt auf die Welle 38 aufgespritzt oder einteilig mit der Welle ausgebildet werden, wie oben erwähnt.

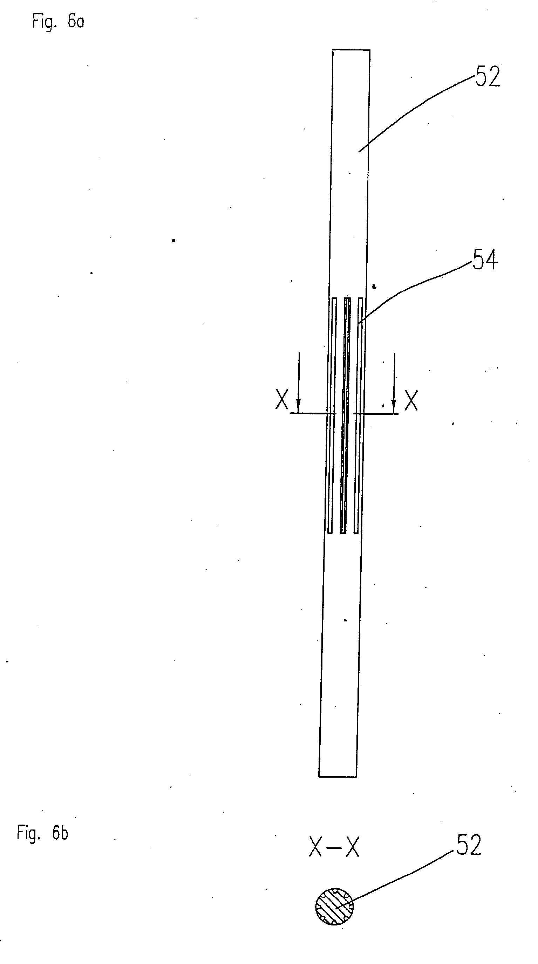

Fig. 6a und 6b zeigen eine Seitenansicht sowie eine Schnittdarstellung durch eine Welle 52, auf die der erfindungsgemäße Rotorrückschluß aufgebracht werden kann. Wie in den Figuren gezeigt, können in die Welle 52 Rillen 54 eingearbeitet werden, mit denen die Vorsprünge 16 in Eingriff gebracht werden. Der erfindungsgemäße Rotorrückschluß hat den Vorteil, daß er auf eine Welle der in Fig. 6a, 6b gezeigten Art, unmittelbar aufgewickelt werden kann, so daß die Spitzen 22 der Vorsprünge 16 mit den Rillen 54 in Eingriff kommen. Der Rotorrückschluß ist somit ohne Probleme auch dann montierbar, wenn der Durchmesser des Verzahnungsgrundes auf der Welle kleiner ist als der Außendurchmesser der Welle.

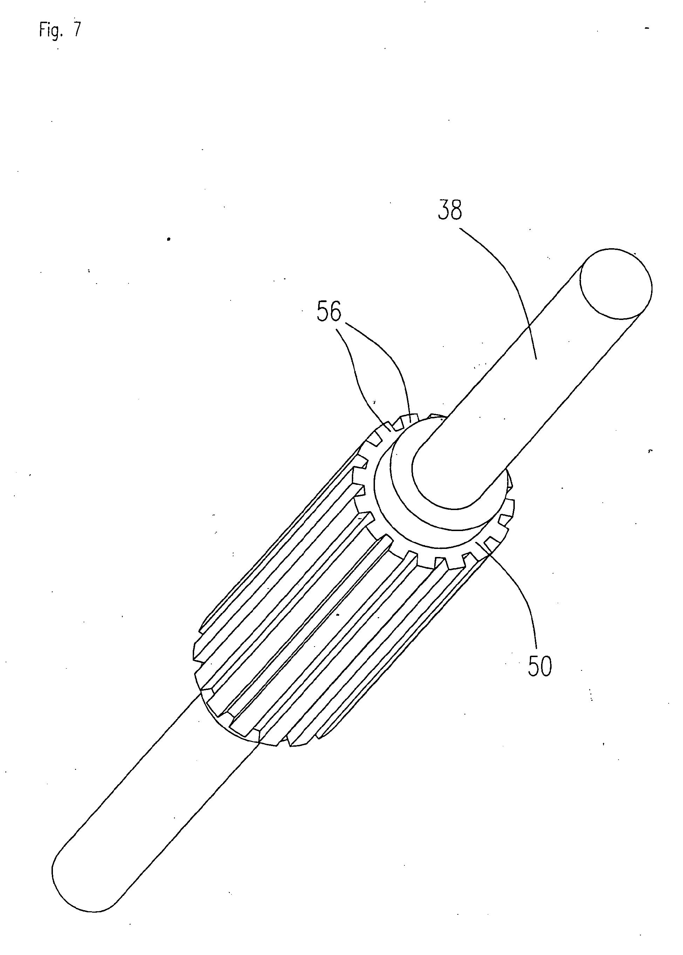

In einer alternativen Ausführung, die in Fig. 7 gezeigt ist, ist auf die Welle 38 ein Körper 50 aufgebracht, der eine Verzahnung 56 aufweist, die mit den Vorsprüngen 16 des Rückschlußkörpers formschlüssig verbunden werden kann. Der Körper 50 kann beispielsweise aus Kunststoff bestehen und auf die Welle 38 aufgespritzt oder einteilig mit der Welle 38 ausgebildet werden.

Der erfindungsgemäße Rotorkörper hat den großen Vorteil, daß er fast ohne Verschnitt aus Rotorblechen aufgebaut werden kann, welche dieselbe Walzrichtung haben. Die Rotorbleche werden zunächst nach Art eines Bandes hergestellt und dann in der Bandebene zu einem Ring gebogen. Dadurch hat jedes ringförmige Rotorblech dieselbe magnetische Vorzugsrichtung oder, in anderen Worten, in jedem Rotorbereich herrscht dieselbe magnetische Vorzugsrichtung des Rotormaterials. Daraus ergeben sich isotrope, homogene Materialeigenschaften des Rotorkörpers und somit ein ruhiger Motorlauf. Zusätzlich hat der erfindungsgemäße Rotorkörper den Vorteil, daß er ohne Probleme mit einer Welle formschlüssig verbunden werden kann, die eine Verzahnung zum Aufnehmen der Spitzen der Vorsprünge aufweist, die einen Verzahnungsgrund mit geringerem Durchmesser hat als der Wellenaußendurchmesser.

Die in der vorstehenden Beschreibung, den Ansprüchen und den Figuren offenbarten Merkmale sind sowohl einzeln als auch in beliebiger Kombination für die Verwirklichung der Erfindung in den verschiedenen Ausführungsformen von Bedeutung.

### Bezugszeichenliste

- 12, 14: Rückschlußbleche, Rotorbleche
- 11, 13: Längskanten
- 16: Vorsprünge
- 17: Stege
- 18: Spalt
- 20: Schlitze bzw. Aussparungen
- 22: Spitzen
- 24: Erhebungen
- 28: Rotorrückschluß, Rotorkörper
- 38: Welle
- 40: Rotorrückschluß, Rotorkörper
- 42: Nahtstelle
- 44, 46: Rückschlußabschnitt
- 48: Nahtstellen
- 50: Körper
- 52: Welle
- 54: Rillen
- 56: Verzahnung
- 100: Gehäuse
- 112: Statoranordnung
- 114: Rotoranordnung
- 116, 118: Lager
- 120: Metallbleche
- 122: Wicklungen
- 126: Motorwelle
- 128: Eisenrückschluß
- 130: Permanentmagnete
- 132: Flansch

## Patentansprüche

1. Rotorkörper für einen Rotor einer elektrischen Maschine mit
wenigstens einem Rotorblech (12, 14), das nach Art eines Bandes mit einer Reihe von Vorsprüngen (16) entlang einer Längskante (11) des Bandes ausgebildet und in der Ebene des Bandes zu einem Ring gebogen ist, wobei nach dem Biegen des Rotorbleches (12, 14) die Vorsprünge (16) nach innen weisen und das Rotorblech eine im wesentlichen geschlossene Außenkante (13) aufweist.

2. Rotorkörper nach Anspruch 1, **dadurch gekennzeichnet, daß** die Vorsprünge (16) derart ausgebildet sind, daß das gebogenen Rotorblech (12, 14) einen Ring mit Aussparungen (20) zum Aufnehmen von Magneten bildet, wobei die Aussparungen zwischen den Vorsprüngen (16) gebildet und, in radialer Richtung nach innen offen und nach außen geschlossen sind.

3. Rotorkörper nach Anspruch 1 oder 2, **dadurch gekennzeichnet, daß** die Vorsprünge (16) mit konstantem Abstand zueinander entlang der Längskante (11) angeordnet und konisch geformt sind.

4. Rotorkörper nach einem der vorangehenden Ansprüche, **dadurch gekennzeichnet, daß** das Rotorblech (12, 14) an einer Nahtstelle (42) geschlossen ist.

5. Rotorkörper nach einem der vorangehenden Ansprüche, **dadurch gekennzeichnet, daß** mehrere Rotorbleche (12, 14) in axialer Richtung des Rotors gestapelt sind.

6. Rotorkörper nach Anspruch 4 und 5, **dadurch gekennzeichnet, daß** die mehreren Rotorbleche (12, 14) derart gestapelt sind, daß die Nahtstellen (48) verschiedener Rotorbleche (12, 14) fluchten.

7. Rotor einer elektrischen Maschine mit einer Welle (38) und einem Rotorkörper (40) nach einem der vorangehenden Ansprüche, **dadurch gekennzeichnet, daß** der Rotorkörper (40) um die Welle (38; 52) gewickelt ist, die Welle (38; 52) eine Verzahnung (54; 56) auf ihrem Außenumfang aufweist und die Vorsprünge (16) des Rotorkörpers (40) mit der Verzahnung (54; 56) der Welle (38; 52) in Eingriff sind.

8. Rotor nach Anspruch 7, **dadurch gekennzeichnet, daß** die Verzahnung (54; 56) in die Welle (38; 52) integriert oder in einem Körper (50) ausgebildet ist, der auf die Welle (38; 52) aufgebracht ist.

9. Verfahren zum Herstellen eines Rotorkörpers für einen Rotor einer elektrischen Maschine mit folgenden Verfahrensschritten:
Bereitstellen wenigstens eines Rotorbleches (12, 14), das nach Art eines Bandes mit einer Reihe von Vorsprüngen (16) entlang einer Längskante (11) des Bandes (12, 14) ausgebildet ist;
Biegen des Rotorbleches (12, 14) in der Ebene des Bandes zu einem Ring, wobei nach dem Biegen die Vorsprünge (16) nach innen weisen und der Ring eine im wesentlichen geschlossene Außenkante aufweist.

10. Verfahren nach Anspruch 9, **dadurch gekennzeichnet, daß** das zu einem Ring gebogene Rotorblech (12, 14) an einer Nahtstelle (42) geschlossen wird.

11. Verfahren nach einem der Ansprüche 9 und 10, **dadurch gekennzeichnet, daß** mehrere Rotorbleche (12, 14) in axialer Richtung des Rotors zu einem Blechpaket gestapelt werden.

12. Verfahren nach Anspruch 10 und 11, **dadurch gekennzeichnet, daß** die mehreren Rotorbleche (12, 14) derart gestapelt werden, daß die Nahtstellen (48) verschiedener Rotorbleche fluchten.

13. Verfahren nach einem der Ansprüche 9 bis 12, **dadurch gekennzeichnet, daß** jeweils zwei Rotorbleche (12, 14) aus einem Blechband (10) ausgestanzt werden, wobei die Rotorbleche (12, 14) einander gegenüberliegen und die Vorsprünge (16) miteinander verzahnt sind.

14. Verfahren nach einem der Ansprüche 9 bis 13, **dadurch gekennzeichnet, daß** die Vorsprünge (16) derart ausgebildet werden, daß durch das Biegen jedes Rotorbleches (12, 14) ein Ring mit Aussparungen (20) entsteht, wobei die Aussparungen (20) zwischen den Vorsprüngen (16) gebildet werden und in radialer Richtung nach innen offen und nach außen geschlossen sind, und daß in die Aussparungen (20) Rotormagnete eingefügt werden.

15. Verfahren nach einem der Ansprüche 9 bis 14, **dadurch gekennzeichnet, daß** die Rotorbleche (12, 14) zunächst gestapelt und anschließend zu dem Rotorkörper gebogen werden.

16. Verfahren zum Herstellen eines Rotors einer elektrischen Maschine mit einer Welle (38; 52) und einem Rotorkörper, der nach dem Verfahren gemäß einem der vorangehenden Ansprüche 9 bis 15 hergestellt wurde, **dadurch gekennzeichnet, daß** auf dem Außenumfang der Welle (38; 52) eine Verzahnung (54; 56) ausgebildet wird und der Rotorkörper um die Welle (38; 52) gewickelt wird, wobei die Vorsprünge (16) des Rotorkörpers mit der Verzahnung (54; 56) der Welle (38; 52) in Eingriff kommen.

17. Rotor nach Anspruch 16, **dadurch gekennzeichnet, daß** die Verzahnung (54; 56) auf der Welle (38) oder in einem Körper (50), der auf die Welle (52) aufgebracht wird, ausgebildet wird.
